# EUROPEAN PATENT SPECIFICATION

(11) **EP 2 400 675 B1**
(45) Date of publication and mention of the grant of the patent: **24.07.2019**
(21) Application number: 09840373.6
(22) Date of filing: 23.02.2009
(51) Int. Cl.: H04B 7/185, H04L 1/00

(54) **SATELLITE COMMUNICATION SYSTEM AND DATA TRANSMISSION METHOD**
SATELLITENKOMMUNIKATIONSSYSTEM UND DATENÜBERTRAGUNGSVERFAHREN
SYSTÈME DE COMMUNICATION PAR SATELLITE ET PROCÉDÉ DE TRANSMISSION DE DONNÉES

(43) Date of publication of application: 28.12.2011
(73) Proprietor: Mitsubishi Electric Corporation, Tokyo 100-8310 (JP)
(72) Inventor: INOUE, Tomoka, Tokyo 100-8310 (JP); MIZUOCHI, Takashi, Tokyo 100-8310 (JP)
(74) Representative: Pfenning, Meinig & Partner mbB
(86) International application number: PCT/JP2009/053213
(87) International publication number: WO 2010/095267

(56) References cited:
- JP-A- 9 121 184
- JP-A- 2004 120 616
- JP-T- 2008 532 361
- US-A- 5 722 042
- US-A1- 2005 101 247
- CHAN V W S: "Optical space communications", IEEE JOURNAL OF SELECTED TOPICS IN QUANTUM ELECTRONICS, IEEE SERVICE CENTER, PISCATAWAY, NJ, US, vol. 6, no. 6, 1 November 2000 (2000-11-01), pages 959-975, XP011449534, ISSN: 1077-260X, DOI: 10.1109/2944.902144

## Description

### TECHNICAL FIELD

The present invention relates to a satellite communication system that realizes communications between a user satellite and a terrestrial station by use of a data relay satellite and also establishes optical communications between the user satellite and the data relay satellite, and also relates to a data transmission method.

### BACKGROUND ART

Patent Document 1 shown below, for example, discloses a conventional technology relating to a satellite communication system. The optical communication system described in Patent Document 1 realizes robust communications by applying forward error correction (FEC) to the optical communications between two terminals so that more volume of data can be transmitted.

Patent Document 1: Japanese Patent Application Laid-open No. 2008-193701
US 2005/0101247 A1 refers to a communication satellite facility and satellite communication system. This document provides a communication satellite facility and a satellite communication system adapted to respond flexibly to development and change of communication technologies occurring on the ground even after satellites have been launched. The system according to this document comprises a first satellite having antenna function, a second satellite having modem function and a third satellite having server function all of which are launched into one and same slot of geo-synchronous orbit and connected one to another by wide-band intersatellite communication. A ground station connected to a ground network communicates with the first satellite.

### DISCLOSURE OF INVENTION

### PROBLEM TO BE SOLVED BY THE INVENTION

However, when the technology described in Patent Document 1 is applied to a system having a configuration for transmitting and receiving data between the ground and a satellite via a relay satellite, the relay satellite also requires FEC circuits (encoding circuit and decoding circuit), which causes a problem of increasing power consumption at the time of the relaying process.

The present invention has been devised in light of the above, and its purpose is to obtain a satellite communication system and a data transmission method, with which power consumption in a data relay satellite is reduced in comparison with the conventional technology.

### MEANS FOR SOLVING PROBLEM

In order to solve the aforementioned problems and attain the aforementioned object, a satellite communication system in which a user satellite and a terrestrial station transmit data by way of a data relay satellite according to one aspect of the present invention is constructed in such a manner that the user satellite and the terrestrial station each include: an encoding/decoding unit that performs error correction encoding on transmission data and decoding on reception data that is subjected to the error correction encoding, and the data relay satellite includes: a format converting unit that, based on a modulation scheme used in a transmission channel to the user satellite and a modulation scheme used in a transmission channel to the terrestrial station, converts a signal received from one transmission channel to a format that suits the modulation scheme corresponding to the other transmission channel and generates a transmission signal while maintaining Forward Error Correction (FEC) frame.

### EFFECT OF THE INVENTION

In the satellite communication system according to the present invention, a user satellite and a terrestrial station conduct an error correction process, a data relay satellite that relays data transmitted and received between the user satellite and the terrestrial station conducts only a format converting process in accordance with the signal transmission modes for a transmission channel to the user satellite and for a transmission channel to the user satellite and transfers data without performing error correction in these transmission channels. Thus, power consumption can be advantageously reduced at the data relay satellite, while the quality of data transmission can be maintained.

### BRIEF DESCRIPTION OF DRAWINGS

FIG. 1 is a diagram for showing the example structure of a satellite communication system according to the first embodiment of the present invention.
FIG. 2 is a diagram for showing the example structure of a satellite communication system according to the second embodiment of the present invention.

### EXPLANATIONS OF LETTERS OR NUMERALS

- 1, 1A, 1B: Data relay satellite
- 2, 2A, 2B: User satellite
- 3, 3A, 3B, 3C, 3D: Terrestrial station
- 10, 20, 30: Signal processing unit
- 11, 18, 21, 31: Antenna
- 12, 23: Optoelectronic conversion unit (O/E)
- 13, 22: Electro-optical conversion unit (E/O)
- 14, 15: Format converting unit
- 16, 32: Transmitting unit (TX)
- 17, 33: Receiving unit (RX)
- 24, 34: FEC encoding circuit
- 25, 35: FEC decoding circuit

### BEST MODE(S) FOR CARRYING OUT THE INVENTION

Exemplary embodiments of a satellite communication system according to the present invention are explained in detail below with reference to the drawings. This invention is not limited to these embodiments, however.

### First Embodiment

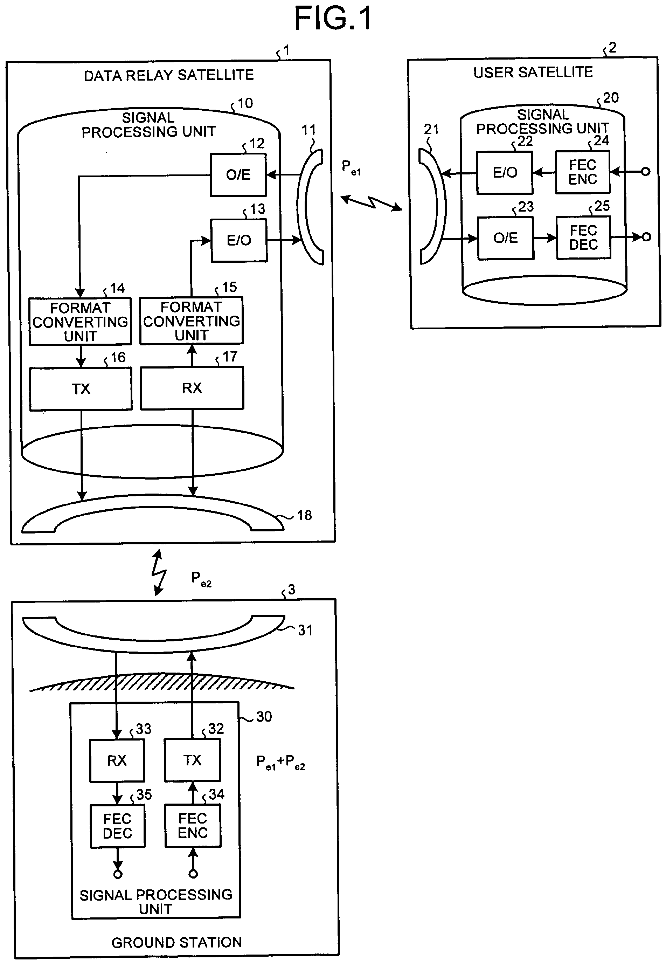

FIG. 1 is a diagram for showing an example structure of a satellite communication system according to the first embodiment of the present invention. This satellite communication system includes a data relay satellite 1, a user satellite 2, and a terrestrial station 3, where the data relay satellite 1 relays a signal transmitted from the user satellite 2 to the terrestrial station 3 and a signal transmitted from the terrestrial station 3 to the user satellite 2. The user satellite 2 and the terrestrial station 3 transmit and receive data by way of the data relay satellite 1. Wireless communication using laser light is conducted between the user satellite 2 and the data relay satellite 1, achieving a minimization of antenna diameter. On the other hand, wireless communication using radio waves is conducted between the terrestrial station 3 and the data relay satellite 1.

Furthermore, examples of the inner structures of the satellites (the data relay satellite 1 and the user satellite 2) and the terrestrial station 3 are also shown in FIG. 1. In other words, the data relay satellite 1 includes a signal processing unit 10 that performs a relaying process onto signals transmitted and received between the user satellite 2 and the terrestrial station 3, an antenna 11 used in the communications with the user satellite 2, and an antenna 18 used in the communications with the terrestrial station 3, where the signal processing unit 10 includes an optoelectronic conversion unit (O/E) 12 that converts an optical signal to an electrical signal, an electro-optical conversion unit (E/O) 13 that converts an electrical signal to an optical signal, format converting units 14 and 15 that perform onto an input signal a format converting process, which will be discussed later, a transmitting unit (TX) 16 that transmits an electrical signal to the terrestrial station 3, and a receiving unit (RX) 17 that receives an electrical signal from the terrestrial station 3. The format converting units 14 and 15 form a format converting section.

The user satellite 2 includes an antenna 21 used in the communications with the data relay satellite 1, and a signal processing unit 20 that performs a signal transmitting/receiving process, where the signal processing unit 20 includes an electro-optical conversion unit 22 that converts an electrical signal to an optical signal, an optoelectronic conversion unit 23 that converts an optical signal to an electrical signal, an FEC encoding circuit (FEC ENC) 24 that encodes transmission data addressed to the terrestrial station 3, and an FEC decoding circuit 25 that decodes the encoded reception data. In the user satellite 2, the FEC encoding circuit 24 and the FEC decoding circuit 25 form an encoding/decoding section.

The terrestrial station 3 includes an antenna 31 used in communications with the data relay satellite 1 and a signal processing unit 30 that performs a signal transmitting/receiving process, where the signal processing unit 30 includes a transmitting unit (TX) 32 that transmits an electrical signal to the data relay satellite 1, a receiving unit (RX) 33 that receives an electrical signal from the data relay satellite 1, an FEC encoding circuit (FEC ENC) 34 that encodes transmission data addressed to the user satellite 2, and an FEC decoding circuit 35 that decodes the encoded reception data. In the terrestrial station 3, the FEC encoding circuit 34 and the FEC decoding circuit 35 form an encoding/decoding section.

In FIG. 1, "Pₑ₁" denotes a bit error rate in the transmission channel between the data relay satellite 1 and the user satellite 2, while "Pₑ₂" denotes a bit error rate in the transmission channel between the data relay satellite 1 and the terrestrial station 3.

Now, the operation performed when the user satellite 2 and the terrestrial station 3 transmit and receive data in the satellite communication system having the above structure is explained with reference to FIG. 1.

First, the operation performed when the user satellite 2 transmits data to the terrestrial station 3 is explained. In the user satellite 2, when transmitting data addressed to the terrestrial station 3, the FEC encoding circuit 24 receives transmission data, and performs FEC encoding. The FEC-encoded transmission data is sent to the electro-optical conversion unit 22. The electro-optical conversion unit 22 converts the FEC-encoded transmission data that is the electrical signal input from the FEC encoding circuit 24, to an optical signal, and transmits it to the data relay satellite 1 by way of the antenna 21.

In the data relay satellite 1 that receives the above optical signal transmitted from the user satellite 2 (the optical signal including FEC-encoded data), the received optical signal is input to the optoelectronic conversion unit 12 by way of the antenna 11, and the optoelectronic conversion unit 12 converts the received optical signal to an electrical signal. Then, the electrical signal output from the optoelectronic conversion unit 12 is sent to the format converting unit 14, and the format converting unit 14 converts the input signal to a signal of a format that suits the modulation scheme used in the wireless zone between the terrestrial station 3 and itself so that the function of achieving frame synchronization for error correction can be realized. For example, when the modulation scheme for signals from the user satellite 2 to the data relay satellite 1 is PSK, and the modulation scheme for signals from the data relay satellite 1 to the terrestrial station 3 is 16QAM, the format converting unit 14 performs mapping to a frame of the 16QAM zone while maintaining the FEC frame of the PSK zone. The signal subjected to the format conversion is sent to the transmitting unit 16, and the transmitting unit 16 up-converts the baseband signal that is the received signal to an RF signal, and transmits it to the terrestrial station 3 by way of the antenna 18.

In the terrestrial station 3 that receives the RF signal transmitted by the data relay satellite 1, the received signal is input to the receiving unit 33 by way of the antenna 31, and the receiving unit 33 down-converts the received RF signal to a baseband signal. Then, the baseband signal is sent to the FEC decoding circuit 35, and the FEC decoding circuit 35 executes an FEC decoding process onto the received signal to restore the original data (transmission data).

Next, the operation performed when the terrestrial station 3 transmits data to the user satellite 2 is dealt with. Because this operation is a reverse operation of the aforementioned operation performed when the user satellite 2 transmits data to the terrestrial station 3, it will be briefly explained.

In the terrestrial station 3, when the terrestrial station 3 transmits data to the user satellite 2, the FEC encoding circuit 34 encodes the transmission data and transmits it to the data relay satellite 1 by way of the transmitting unit 32 and the antenna 31. In the data relay satellite 1 that receives the signal including the FEC-encoded data from the terrestrial station 3, the format converting unit 15 performs the reverse conversion process of the aforementioned format conversion process performed by the format converting unit 14 onto the input signal, and the signal subjected to the format conversion is converted to an optical signal at the electro-optical conversion unit 13 and then transmitted to the user satellite 2 by way of the antenna 11. In the user satellite 2 that receives the optical signal from the data relay satellite 1, the optoelectronic conversion unit 23 converts the received optical signal to an electrical signal, and the FEC decoding circuit 25 executes the FEC decoding process onto the converted signal that is the electrical signal to restore the original data. However, if the volume of data is not large, the FEC decoding process (the FEC decoding circuit 25) may not be required at the user satellite 2. The reason is explained below.

Signals that are notified of by the user satellite 2 to the terrestrial station 3 by way of the data relay satellite 1 are in large volume. On the other hand, signals that are received by the user satellite 2 from the terrestrial station 3 by way of the data relay satellite 1 are not always in large volume. Bit errors occur independently of the data volume. If the band is wide, the S/N ratio decreases when noise, such as white noise, the intensity of which is unchanged at any frequency is included. However, if the band is narrow enough, white noise does not significantly affect the S/N ratio. For this reason, if the data transmitted by the terrestrial station 3 to the user satellite 2 by way of the data relay satellite 1 includes, for example, only the attitude control data or the like and thus the volume of data is not large, the user satellite 2 does not require the FEC decoding circuit 25.

The explanation returns to the operation of the entire satellite communication system. As indicated in the device structure of FIG. 1 and the above explanation, in the satellite communication system according to the present embodiment, the user satellite 2 and the terrestrial station 3 include FEC encoding/decoding circuits, and an error correction process is implemented between the user satellite 2 and the terrestrial station 3. In other words, when receiving a signal from the user satellite 2 or the terrestrial station 3, the data relay satellite 1 executes the signal conversion process in accordance with different signal transmission schemes applied to the wireless zones (a difference between the use of light or radio waves and a difference between the modulation schemes) before transmitting it. However, an error correction process is not performed in each of the wireless zones.

Here, for example, the data transmitted from the user satellite 2 to the terrestrial station 3 is transferred from the data relay satellite 1 to the terrestrial station 3, with a bit error rate Pₑ₁ maintained in the transmission channel from the user satellite 2 to the data relay satellite 1, and furthermore, a bit error rate Pₑ₂ of the transmission channel from the data relay satellite 1 to the terrestrial station 3 is added thereto. The data ultimately reaches the terrestrial station 3 with the bit error rate of Pₑ₁+Pₑ₂ maintained. The same holds for the data transmitted from the terrestrial station 3 to the user satellite 2. Thus, the FEC encoding/decoding circuits of the user satellite 2 and the terrestrial station 3 (the FEC encoding circuits 24 and 34 and the FEC decoding circuits 25 and 35) execute the FEC encoding process and the FEC decoding process, by correcting those bit errors so that a desired communication performance is achievable.

For example, when the FEC that has the ability of correcting the bit error rate of 2.4×10⁻³ to 1.0×10⁻¹⁰ is used, if Pₑ₂ is significantly smaller than 2.4×10⁻³, the communication can be conducted in the same manner, without changing the circuit designs of the user satellite 2 and the data relay satellite 1.

As shown above, in the satellite communication system according to the present embodiment, the user satellite and the terrestrial station include circuits for correcting errors in the reception data (FEC encoding circuits and FEC decoding circuits), and the data relay satellite that relays the data transmitted and received between the user satellite and the terrestrial station only performs a format converting process in accordance with modulation schemes used for the transmission channel to the user satellite and for the transmission channel to the terrestrial station and transmits signals (data) without correcting errors in these transmission channels. In this manner, a satellite communication system in which power consumption can be reduced in the data relay satellite while desired data transmission quality is maintained can be realized.

In addition, because the data relay satellite does not require a circuit for error correction, the circuit size can be reduced, and the cost can be reduced.

### Second Embodiment

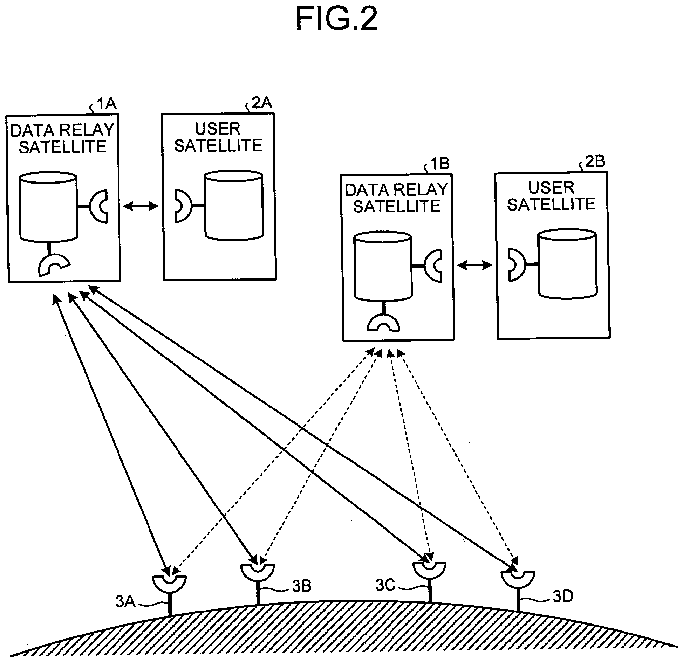

According to the first embodiment, the situation in which the user satellite and the terrestrial station conduct one-to-one communication has been explained, but one user satellite may communicate simultaneously with a plurality of terrestrial stations. FIG. 2 is a diagram for showing an example structure of a satellite communication system according to the second embodiment of the present invention, where one user satellite communicates simultaneously with a plurality of terrestrial stations.

In the illustrated example, a user satellite 2A and terrestrial stations 3A to 3D are communicating simultaneously with one another by way of the data relay satellite 1A. If, for example, the user satellite 2A and the data relay satellite 1A move or the like and the terrestrial stations 3A to 3D are therefore no longer able to communicate with the data relay satellite 1A, the terrestrial stations 3A to 3D communicate, if communication with another data relay satellite 1B is achievable, with a user satellite 2B by way of the data relay satellite 1B. Moreover, the device structures of the illustrated satellites (the data relay satellites 1A and 1B, and the user satellites 2A and 2B) and the terrestrial stations 3A to 3D are the same as the data relay satellite 1 and the terrestrial station 3 explained in the first embodiment.

In addition, in the satellite communication system illustrated in FIG. 2, simultaneous communications with a plurality of terrestrial stations are realized by using the Orthogonal Frequency Division Multiplexing Access (OFDMA) system in the communications between the data relay satellites 1A and 1B and the terrestrial stations 3A to 3D.

As shown above, the satellite communication system according to the present embodiment realizes one-toN communications by adopting the OFDMA in the communications between the data relay satellite and the terrestrial stations. In this manner, the data relay satellite can assign less degraded subcarriers to each of the terrestrial stations, and can assign high-quality subcarriers in combination. In other words, data can be effectively transmitted between the data relay satellite and the terrestrial stations.

In the above explanation, there is one data relay satellite that performs relaying between the user satellite and the terrestrial stations, but a plurality of data relay satellites may be applied so that transmission can be performed for multiple times. In such a situation also, the data relay satellite simply performs transmission only, and an error correction may be performed only between the user satellite and the terrestrial stations.

### INDUSTRIAL APPLICABILITY

As discussed above, the satellite communication system according to the present invention is effective when a communication system in which a user satellite and a terrestrial station communicate with each other by way of a relay satellite is built, and it is suitable especially for a communication system that performs data transmission while minimizing power consumption in the relay satellite.

## Claims

1. A satellite communication system in which a user satellite (2) and a terrestrial station (3) transmit data by way of a data relay satellite (1), wherein:
the user satellite (2) and the terrestrial station (3) each comprise:
an encoding/decoding unit (24, 25, 34, 35) that performs error correction encoding on transmission data and decoding on reception data that is subjected to the error correction encoding, **characterized in that**
the data relay satellite (1) comprises:
a format converting unit (14, 15) that, based on a modulation scheme used in a transmission channel to the user satellite (2) and a modulation scheme used in a transmission channel to the terrestrial station (3), converts a signal received from one transmission channel to a format that suits the modulation scheme corresponding to the other transmission channel while maintaining Forward Error Correction (FEC) frame and generates a transmission signal.

2. The satellite communication system according to claim 1, wherein the terrestrial station (3) and the data relay satellite (1) conduct wireless communication using radio waves, and the user satellite (2) and the data relay satellite (1) conduct satellite optical communications.

3. The satellite communication system according to claim 1 or 2, wherein the Orthogonal Frequency Division Multiplexing Access (OFDMA) is adopted as a system of communications between the data relay satellite (1A, 1B) and a plurality of terrestrial stations (3A, 3B, 3C, 3D).

4. A data transmission method executed by a satellite communication system in which a user satellite (2) and a terrestrial station (3) transmit data by way of a data relay satellite (1), comprising:
a data encoding step at which the user satellite (2) or the terrestrial station (3) that operates as a data sender device performs error correction encoding onto transmission data and transmits a signal including encoded data to the data relay satellite (1); **characterized by**
a transferring step at which the data relay satellite (1) converts, based on a modulation scheme used for a transmission channel to the data sender device and a modulation scheme used for a transmission channel to an addressee device to which reception signal is transferred, the signal received from the data sender device to a format that suits the modulation scheme corresponding to the transmission channel to the addressee device while maintaining Forward Error Correction (FEC) frame, and transmits it to the addressee device; and
a data decoding step at which the terrestrial station (3) or the user satellite (2) that operates as the addressee device performs error correction decoding onto data included in the signal received from the data relay satellite (1).

## Patentansprüche

1. Satellitenkommunikationssystem, in dem ein Benutzersatellit (2) und eine terrestrische Station (3) Daten mittels eines Datenrelaissatelliten (1) übertragen, wobei:
der Benutzersatellit (2) und die terrestrische Station (3) jeweils umfassen:
eine Codierungs-/Decodierungseinheit (24, 25, 34, 35), die Fehlerkorrekturcodierung an Übertragungsdaten und Decodierung an Empfangsdaten, die Fehlerkorrekturcodierung unterzogen werden, durchführt, **dadurch gekennzeichnet, dass**
der Datenrelaissatellit (1) umfasst:
eine Formatumwandlungseinheit (14, 15), die, basierend auf einem in einem Übertragungskanal zu dem Benutzersatelliten (2) verwendeten Modulationsschema und einem in einem Übertragungskanal zu der terrestrischen Station (3) verwendeten Modulationsschema, ein von einem Übertragungskanal empfangenes Signal in ein Format umwandelt, das zu dem mit dem anderen Übertragungskanal korrespondierenden Modulationsschema passt, während ein Vorwärtsfehlerkorrektur (FEC)-Rahmen beibehalten wird, und ein Übertragungssignal erzeugt.

2. Satellitenkommunikationssystem nach Anspruch 1, wobei die terrestrische Station (3) und der Datenrelaissatellit (1) drahtlose Kommunikation unter Verwendung von Funkwellen durchführen und der Benutzersatellit (2) und der Datenrelaissatellit (1) optische Satellitenkommunikationen durchführen.

3. Satellitenkommunikationssystem nach Anspruch 1 oder 2, wobei der orthogonale Frequenzmultiplexzugriff (OFDMA) als ein System der Kommunikationen zwischen dem Datenrelaissatelliten (1A, 1B) und einer Vielzahl von terrestrischen Stationen (3A, 3B, 3C, 3D) eingesetzt wird.

4. Datenübertragungsverfahren, ausgeführt durch ein Satellitenkommunikationssystem, in dem ein Benutzersatellit (2) und eine terrestrische Station (3) Daten mittels eines Datenrelaissatelliten (1) übertragen, umfassend:
einen Datencodierungsschritt, in dem der Benutzersatellit (2) oder die terrestrische Station (3), der/die als eine Datensendervorrichtung betrieben wird, Fehlerkorrekturcodierung auf Übertragungsdaten durchführt und ein Signal, das codierte Daten enthält, an den Datenrelaissatelliten (1) überträgt; **gekennzeichnet durch**
einen Transferierschritt, in dem der Datenrelaissatellit (1), basierend auf einem für einen Übertragungskanal zu der Datensendervorrichtung verwendeten Modulationsschema und einem für einen Übertragungskanal verwendeten Modulationsschema zu einer Adressatenvorrichtung, an die Empfangssignal transferiert wird, das von der Datensendervorrichtung empfangene Signal in ein Format umwandelt, das zu dem mit dem Übertragungskanal zu der Adressatenvorrichtung korrespondierenden Modulationsschema passt, während Vorwärtsfehlerkorrektur (FEC)-Rahmen beibehalten wird, und es an die Adressatenvorrichtung überträgt; und
einen Datendecodierungsschritt, in dem die terrestrische Station (3) oder der Benutzersatellit (2), die/der als die Adressatenvorrichtung betrieben wird, Fehlerkorrekturdecodierung auf Daten durchführt, die in dem von dem Datenrelaissatelliten (1) empfangenen Signal enthalten sind.

## Revendications

1. Système de communication par satellite dans lequel un satellite utilisateur (2) et une station terrestre (3) transmettent des données au moyen d'un satellite relais de données (1), dans lequel :
le satellite utilisateur (2) et la station terrestre (3) comprennent chacun :
une unité de codage/décodage (24, 25, 34, 35) qui met en oeuvre un codage de correction d'erreurs sur des données de transmission, et un décodage sur des données de réception qui sont soumises au codage de correction d'erreurs, **caractérisé en ce que** :
le satellite relais de données (1) comprend :
une unité de conversion de format (14, 15) qui, sur la base d'un schéma de modulation utilisé dans un canal de transmission vers le satellite utilisateur (2) et d'un schéma de modulation utilisé dans un canal de transmission vers la station terrestre (3), convertit un signal reçu en provenance d'un canal de transmission en un format qui convient au schéma de modulation correspondant à l'autre canal de transmission, tout en maintenant une trame de correction d'erreurs sans voie de retour (FEC), et génère un signal de transmission.

2. Système de communication par satellite selon la revendication 1, dans lequel la station terrestre (3) et le satellite relais de données (1) mettent en oeuvre une communication sans fil au moyen d'ondes radio, et dans lequel le satellite utilisateur (2) et le satellite relais de données (1) mettent en oeuvre des communications optiques par satellite.

3. Système de communication par satellite selon la revendication 1 ou 2, dans lequel le mode d'accès multiple par répartition orthogonale de la fréquence (OFDMA) est adopté en qualité de système de communication entre le satellite relais de données (1A, 1B) et une pluralité de stations terrestres (3A, 3B, 3C, 3D).

4. Procédé de transmission de données exécuté par un système de communication par satellite dans lequel un satellite utilisateur (2) et une station terrestre (3) transmettent des données au moyen d'un satellite relais de données (1), comprenant :
une étape de codage de données au cours de laquelle le satellite utilisateur (2), ou la station terrestre (3), opérant en qualité de dispositif émetteur de données, met en oeuvre un codage de correction d'erreurs sur des données de transmission, et transmet un signal incluant des données codées, au satellite relais de données (1) ; **caractérisé par** :
une étape de transfert au cours de laquelle le satellite relais de données (1) convertit, sur la base d'un schéma de modulation utilisé pour un canal de transmission vers le dispositif émetteur de données, et d'un schéma de modulation utilisé pour un canal de transmission vers un dispositif destinataire vers lequel un signal de réception est transféré, le signal reçu, en provenance du dispositif émetteur de données, en un format qui convient au schéma de modulation correspondant au canal de transmission vers le dispositif destinataire, tout en maintenant une trame de correction d'erreurs sans voie de retour (FEC), et le transmet au dispositif destinataire ; et
une étape de décodage de données au cours de laquelle la station terrestre (3) ou le satellite utilisateur (2), opérant en qualité de dispositif destinataire, met en oeuvre un décodage de correction d'erreurs sur des données incluses dans le signal reçu en provenance du satellite relais de données (1).
